# FASCICULE DE BREVET EUROPEEN

(11) **EP 4 311 722 B1**
(45) Date de publication et mention de la délivrance du brevet: **11.06.2025**
(21) Numéro de dépôt: 23187439.7
(22) Date de dépôt: 25.07.2023
(51) Int. Cl.: B60P 1/48, F15B 15/04, F15B 15/14, B60P 1/16

(54) **VERIN D'AIDE AU DECOLLAGE**
AUFZIEHHILFEZYLINDER
TAKE-OFF ASSIST CYLINDER

(30) Priorité: 28.07.2022 FR 2207794
(43) Date de publication de la demande: 31.01.2024
(73) Titulaire: Guima Palfinger S.A.S., 82300 Caussade (FR)
(72) Inventeur: GRANEL, Thomas, 82800 Nègrepelisse (FR); RAUCOULES, Michel, 82440 Réalville (FR)
(74) Mandataire: Regimbeau

(56) Documents cités:
- DE-A1- 2 616 813
- DE-U1- 8 620 144
- FR-A- 1 139 620

## Description

### DOMAINE DE L'INVENTION

L'invention concerne un vérin d'aide au décollage, et plus particulièrement un vérin d'aide au décollage destiné à faire partie d'un dispositif de levage pour des conteneurs mobiles.

### ETAT DE LA TECHNIQUE

Certains véhicules de transport sont équipés de dispositifs de levage permettant notamment de charger et de décharger des conteneurs mobiles tels que des bennes, des caisses ou des citernes.

Le dispositif de levage peut comprendre un faux-châssis fixé sur le châssis du véhicule et un bras de levage articulé sur le faux-châssis. Le bras de levage est muni d'un crochet propre à être inséré dans un anneau du conteneur mobile afin de pouvoir charger le conteneur mobile sur le véhicule ou le décharger du véhicule.

Le bras de levage est mobile entre une configuration retractée dans laquelle le bras de levage est repliée contre le faux-châssis et une configuration déployée dans laquelle le bras de levage est déplié pour que le crochet puisse être inséré dans l'anneau d'un conteneur mobile posé à côté du véhicule.

Le bras de levage comprend généralement des vérins permettant de commander le déploiement et la rétractation du bras de levage. De tels vérins sont connus par exemple de DE 26 16 813 A1, DE 86 20 144 U1 et FR 1 139 620 A3.

Cependant, lorsque le bras de levage est en configuration rétractée, ces vérins peuvent être orientés avec un angle très faible par rapport au bras. Il en résulte que la force qui est appliquée par les vérins présente un bras de levier faible par rapport à l'axe de rotation du bras de levage. Ainsi, l'intensité de la force exercée par les vérins doit être très importante pour initier le déploiement du bras de levage.

La force exercée par les vérins est d'autant plus importante que la charge qui doit être soulevée par le bras de levage est élevée. Cela peut être le cas notamment lors d'une opération de bennage, au cours de laquelle le bras de levage est commandé pour faire basculer vers l'arrière un conteneur mobile qui est initialement chargé sur le véhicule.

C'est pourquoi, certains dispositifs de levage comprennent un vérin d'aide au décollage. Le vérin d'aide au décollage est activé au début du mouvement de déploiement du bras de levage de manière à appliquer sur le bras de levage une force de décollage supplémentaire qui vient s'ajouter à la force exercée par les vérins principaux du bras de levage.

Le vérin d'aide au décollage se déploie de manière linéaire et vient en contact avec le bras de levage au début du mouvement de déploiement du bras de levage. Le vérin d'aide au décollage est orienté pour appliquer une force de décollage avec un bras de levier important par rapport à l'axe de rotation du bras de levage.

Cependant, le mouvement du bras de levage est circulaire tandis que le mouvement de la tige du vérin d'aide au décollage qui est en contact avec le bras de levage est linéaire. Cela génère un glissement du vérin d'aide au décollage sur le bras de levage au point de contact entre le vérin et le bras de levage. Les frottements dus au glissement du vérin d'aide au décollage sur le bras de levage génèrent des efforts radiaux sur le vérin d'aide au décollage. Ces efforts radiaux sont d'autant plus importants que la force de décollage exercée par le vérin sur le bras de levage est élevée, c'est-à-dire que la charge est élevée. A la longue, ces efforts radiaux endommagent le vérin d'aide au décollage, et peuvent provoquer des fuites d'huile.

### RESUME DE L'INVENTION

Un but de l'invention est de proposer un vérin d'aide au décollage qui soit moins susceptible d'être endommagé.

Ce but est atteint dans le cadre de la présente invention grâce à un vérin d'aide au décollage comprenant :
- un support propre à être fixé sur un faux-châssis d'un dispositif de levage,
- un corps,
- un piston monté mobile en translation par rapport au corps selon un axe de translation,
- une tige reliée au piston et présentant une extrémité propre à venir en contact avec un bras de levage du dispositif de levage, pour pousser le bras de levage lors d'une rotation du bras de levage par rapport au faux-châssis, et
- un dispositif de liaison reliant le corps au support, le dispositif de liaison autorisant un déplacement angulaire du corps par rapport au support lors de la rotation du bras de levage par rapport au faux-châssis,
dans lequel le corps a une surface externe présentant une portion convexe agencée pour venir en appui contre une surface d'appui montée fixe par rapport au faux-châssis lorsque la tige pousse le bras de levage, la portion convexe étant propre à rouler sur la surface d'appui lors du déplacement angulaire du corps par rapport au support.

Le dispositif de liaison proposé permet au corps du vérin d'aide au décollage de s'orienter librement au fur et à mesure du mouvement du bras de levage. Cela évite ainsi que l'extrémité de la tige glisse sur le bras de levage, et ainsi cela réduit les efforts radiaux susceptibles d'endommager le vérin d'aide au décollage.

De plus, le fait que la portion convexe roule contre la surface d'appui permet d'obtenir un dispositif de liaison simple et robuste, qui ne nécessite pas de lubrification, contrairement à une liaison pivot ou rotule par exemple.

Le vérin d'aide au décollage peut en outre présenter les caractéristiques suivantes :
- le dispositif de liaison comprend une pièce élastique propre à être déformée lorsque le corps est déplacé angulairement depuis une première orientation vers une deuxième orientation, de manière à générer une force de rappel élastique tendant à ramener le corps vers la première orientation ;
- la pièce élastique comprend un bloc en matériau élastique ;
- le dispositif de liaison comprend plusieurs pièces élastiques réparties autour du corps ;
- la portion convexe présente une forme ellipsoïdale, de préférence une forme sphérique ;
- le corps comprend une paroi latérale délimitant une cavité interne dans laquelle est reçu le piston, et un fond fixé à la paroi latérale, la surface externe étant une surface externe du fond ;
- le fond présente une portion conique s'étendant depuis la paroi latérale jusqu'à la portion convexe ;
- le fonds est fixé à la paroi latérale par soudure ;
- l'extrémité de la tige a une surface externe présentant une portion convexe propre à venir en contact avec le bras de levage pour pousser le bras de levage ;
- la portion convexe est propre à rouler sur une surface d'appui du bras de levage lors du déplacement angulaire du corps par rapport au support ;
- la portion convexe présente une forme ellipsoïdale.

L'invention concerne en outre un dispositif de levage comprenant un faux-châssis destiné à être fixé sur le châssis d'un véhicule, un bras de levage monté sur le faux-châssis par l'intermédiaire d'une liaison pivot autorisant une rotation du bras de levage par rapport au faux-châssis entre une configuration retractée et une configuration déployée, et un vérin d'aide au décollage tel que défini précédemment pour pousser le bras de levage lors d'une rotation du bras de levage par rapport au faux-châssis vers la configuration déployée.

Le dispositif de levage peut en outre présenter les caractéristiques suivantes :
- le bras de levage comprend une bielle ayant deux portions latérales, le dispositif de levage comprenant deux vérins d'aide au décollage, chaque vérin d'aide au décollage ayant une tige présentant une extrémité propre à venir en contact avec une portion latérale respective de la bielle, pour pousser le bras de levage ;
- la rotation du bras de levage depuis la configuration rétractée vers la configuration déployée entraine un déplacement angulaire du corps depuis la première orientation vers une deuxième orientation, et le dispositif de liaison du vérin d'aide au décollage comprend une pièce élastique propre à être déformée lorsque le corps est déplacé angulairement depuis la première orientation vers la deuxième orientation, de manière à générer une force de rappel élastique tendant à ramener le corps vers la première orientation.

L'invention concerne également un véhicule de levage ou de manutention, comprenant un châssis et un dispositif de levage, le dispositif de levage comprenant :
- un faux-châssis fixé sur le châssis,
- un bras de levage monté sur le faux-châssis par l'intermédiaire d'une liaison pivot autorisant une rotation du le bras de levage par rapport au faux-châssis, et
- un vérin d'aide au décollage comprenant un support fixé sur le faux-châssis, un corps, un piston monté mobile en translation par rapport au corps selon un axe de translation, une tige reliée au piston et présentant une extrémité destinée à venir en contact avec le bras de levage pour pousser le bras de levage lors de la rotation du bras de levage par rapport au faux-châssis, et un dispositif de liaison reliant le corps au support, le dispositif de liaison autorisant un déplacement angulaire du corps par rapport au support lors de la rotation du bras de levage par rapport au faux-châssis,
dans lequel le corps présente une première surface et le véhicule comprend une deuxième surface montée fixe par rapport au faux-châssis, l'une de la première surface et de la deuxième surface comprend une portion convexe agencée pour venir en appui sur l'autre de la première surface et de la deuxième surface lorsque la tige pousse le bras de levage, la portion convexe étant propre à rouler sur l'autre de la première surface et de la deuxième surface lors du déplacement angulaire du corps par rapport au support.

### PRESENTATION DES DESSINS

D'autres caractéristiques et avantage ressortiront encore de la description qui suit, laquelle est purement illustrative et non limitative et doit être lue en regard des figures annexées, parmi lesquelles :
- la figure 1 représente de manière schématique un véhicule comprenant un dispositif de levage en configuration rétractée,
- la figure 2 représente de manière schématique, le véhicule comprenant le dispositif de levage en configuration déployée, et plus particulièrement en configuration de bennage,
- la figure 3 représente de manière schématique, le véhicule comprenant le dispositif de levage en configuration déployée, et plus particulièrement en configuration de chargement ou de déchargement,
- la figure 4 représente de manière schématique le dispositif de levage comprenant deux vérins d'aide au décollage,
- la figure 5 représente de manière schématique un vérin d'aide au décollage conforme à un mode de réalisation possible de l'invention,
- la figure 6 représente de manière schématique, en coupe longitudinale, le vérin d'aide au décollage en position extrême retractée,
- la figure 7 représente de manière schématique, en coupe longitudinale, le vérin d'aide au décollage, au moment où la tige entre en contact avec le bras de levage du dispositif de levage, lorsque le vérin d'aide au décollage passe de la position extrême rétractée à la position extrême déployée,
- la figure 8 représente de manière schématique, en coupe longitudinale, le vérin d'aide au décollage en position extrême déployée, la tige étant en contact avec le bras de levage du dispositif de levage,
- la figure 9 représente de manière schématique, en coupe longitudinale, le vérin d'aide au décollage en position extrême déployée, la tige n'étant plus en contact avec le bras de levage du dispositif de levage,
- la figure 10 représente de manière schématique, en coupe longitudinale, le vérin d'aide au décollage lorsque le vérin d'aide au décollage passe de la position extrême déployée à la position extrême rétractée.

### DESCRIPTION DETAILLEE D'UN MODE DE REALISATION

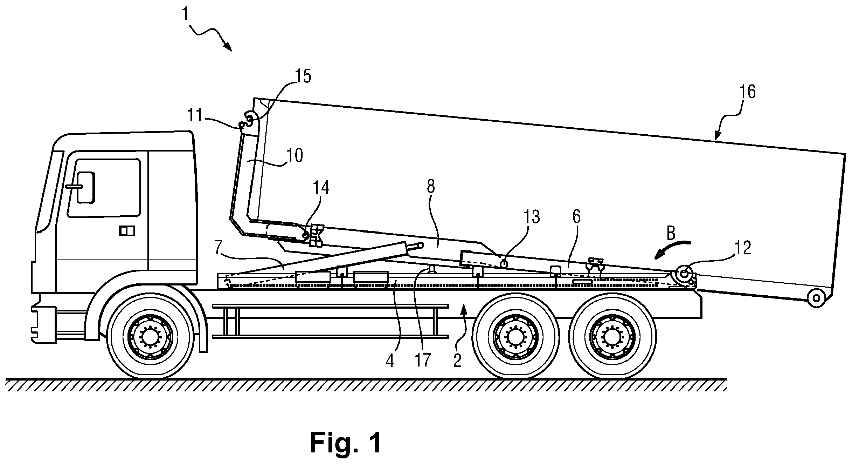

Sur les figures 1 à 3, le véhicule 1 représenté comprend un châssis 2 et un dispositif de levage 3 monté sur le châssis 2.

Le dispositif de levage 3 comprend un faux-châssis 4 et un bras de levage 5 articulé sur le faux-châssis 4. Le faux-châssis 4 est fixé sur le châssis 2 du véhicule 1.

Dans l'exemple illustré sur les figures 1 à 3, le bras de levage 5 comprend un basculeur 6, des premiers vérins 7 (ou vérins de levage principaux), une bielle 8, une potence 10 et un crochet 11.

Le basculeur 6 est monté pivotant sur le faux-châssis 4 par le biais d'une première liaison pivot 12.

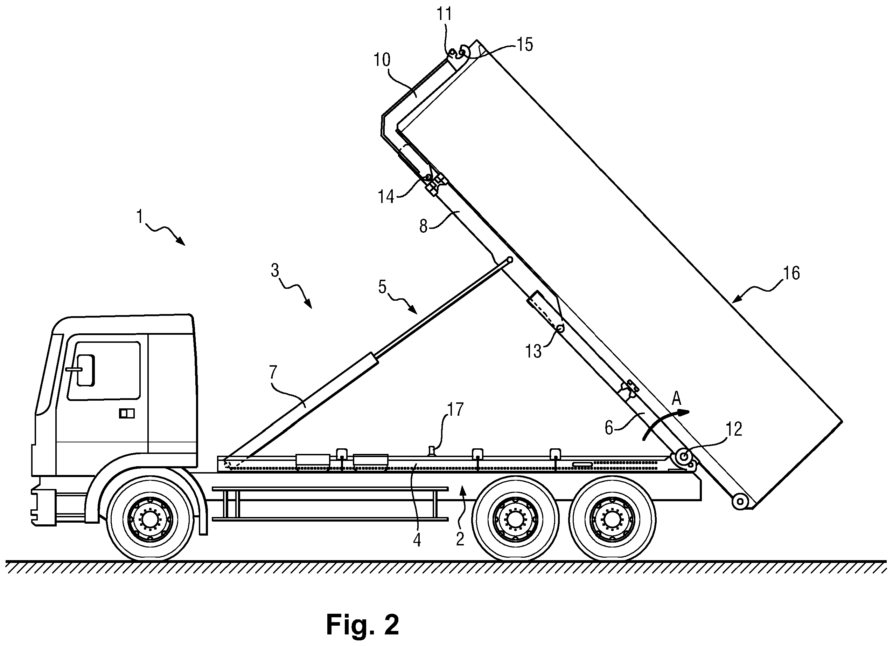

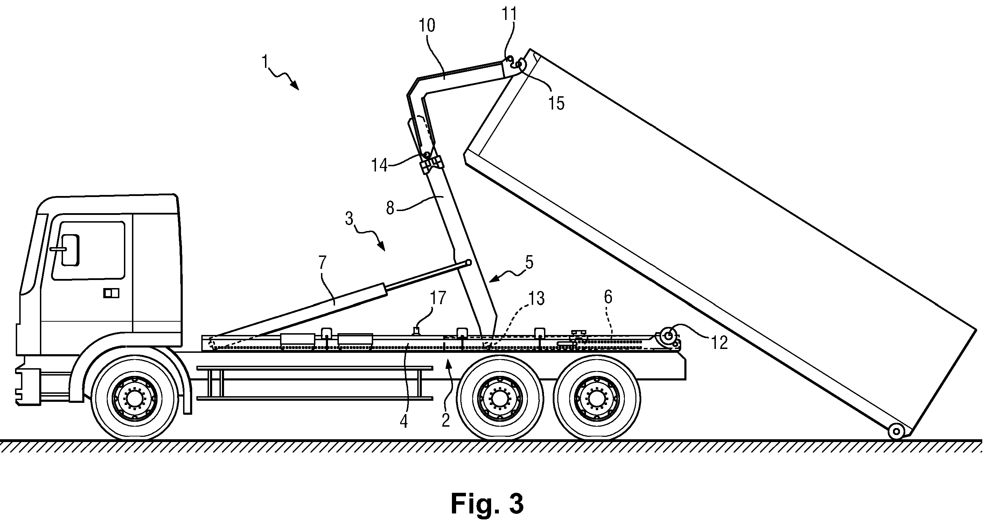

La bielle 8 est montée pivotante sur le basculeur 6 par le biais d'une deuxième liaison pivot 13. Chaque premier vérin 7 présente une extrémité reliée au faux-châssis 4 et une autre extrémité reliée à la bielle 8. Les premiers vérins 7 permettent de commander la rotation du basculeur 6 par rapport au faux-châssis 4 lorsque la bielle 8 est verrouillée en position par rapport au basculeur 6 (configuration illustrée sur la figure 2) ou de commander la rotation de la bielle 8 par rapport au basculeur 6 lorsque le basculeur 6 est verrouillé au faux-châssis 4 (configuration illustrée sur la figure 3).

La potence 10 peut être montée coulissante sur la bielle 8. Dans ce cas, un deuxième vérin monté à l'intérieur de la bielle 18 (non représenté) permet de commander une translation de la potence 10 par rapport à la bielle 8.

De plus, la potence 10 peut être formée en deux parties, l'une des parties étant articulée sur l'autre partie par le biais d'une liaison pivot 14. Dans ce cas, un troisième vérin (non représenté) permet de commander une rotation de l'une des parties par rapport à l'autre.

Le crochet 11 est propre à s'engager dans un anneau 15 d'un conteneur mobile 16 afin de pouvoir faire basculer le conteneur mobile 15 pour le vider (figure 2), ou de pouvoir charger le conteneur mobile 16 sur le véhicule 1 ou décharger le conteneur mobile 16 du véhicule 1 (figure 3).

Sur la figure 1, le dispositif de levage 3 est dans une configuration rétractée, c'est-à-dire que le bras de levage 5 est replié sur le faux-châssis 4. Sur la figure 1, le bras de levage 5 maintient le conteneur mobile 16 sur le châssis 2 du véhicule.

Sur la figure 2, le bras de levage 3 est dans une configuration déployée, c'est-à-dire que le bras de levage 5 est déplié pour pouvoir faire basculer le conteneur mobile 16 vers l'arrière du véhicule.

Pour passer de la configuration rétractée à la configuration déployée, le bras de levage 5 est entrainé en rotation par rapport au faux-châssis 3 selon un premier sens de rotation (illustré par la flèche A sur la figure 2).

A l'inverse, pour passer de la configuration déployée à la configuration retractée, le bras de levage 5 est entrainé en rotation par rapport au faux-châssis 3 selon un deuxième sens de rotation (illustré par la flèche B sur la figure 1), opposé au premier sens de rotation.

De même, sur la figure 3, le bras de levage 3 est dans une configuration déployée, mais cette fois, seule la bielle 8 a été entrainée en rotation par rapport au basculeur 6 (et par conséquent par rapport au faux-châssis 3) selon le premier sens de rotation.

Le dispositif de levage 3 comprend en outre un ou plusieurs vérin(s) d'aide au décollage 17 permettant d'assister les premiers vérins 7 lors du soulèvement du conteneur mobile 16, au début du mouvement de basculement.

Autrement dit, le ou les vérin(s) d'aide au décollage 17 est(sont) propre(s) à exercer une poussée sur le bras de levage 5 tendant à assister la rotation du bras de levage 5 depuis la configuration retractée vers une configuration déployée, dans le premier sens de rotation.

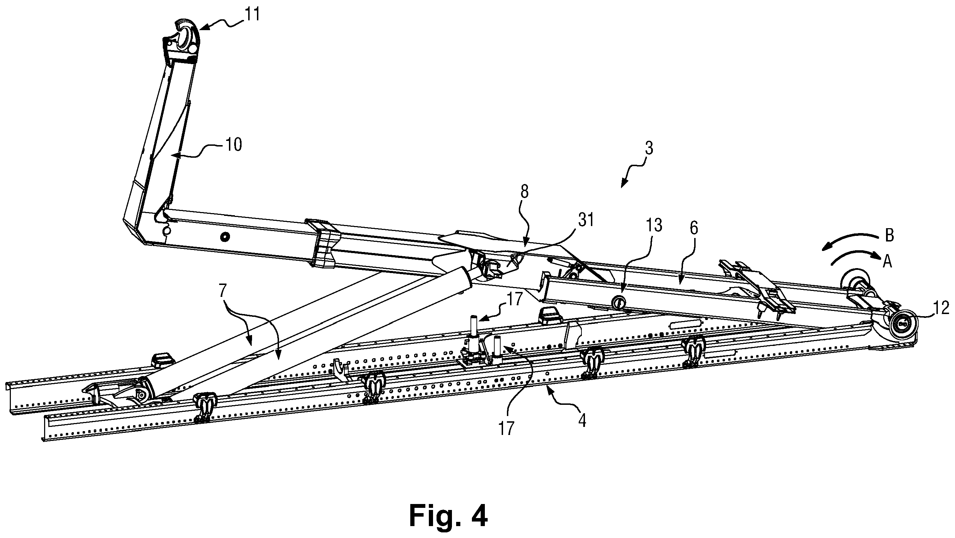

Dans l'exemple illustré sur la figure 4, le dispositif de levage 3 comprend deux vérins d'aide au décollage 17.

De plus, dans cet exemple, la bielle 8 comprend deux portions latérales 31. Chaque vérin d'aide au décollage 17 est propre à exercer une force de poussée sur une portion latérale 31 respective de la bielle 8. Sur la figure 4, les portion latérales 31 sont des pièces d'attache permettant de relier les extrémités des premiers vérin 7 à la bielle 8. Toutefois, les portions latérales pourraient être formées par d'autres pièces.

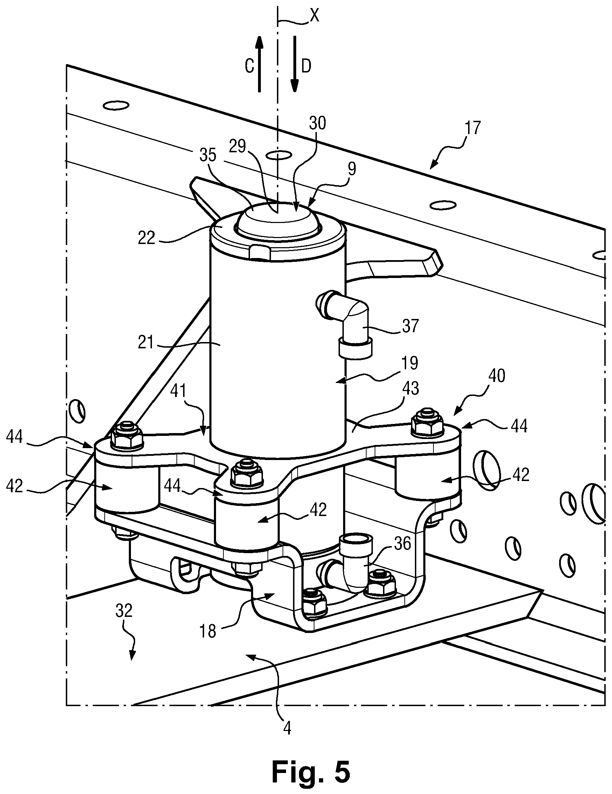

Comme illustré sur les figures 5 à 10, le vérin d'aide au décollage 17 comprend un support 18, un corps 19, un piston 20 et une tige 9 reliée au piston 20.

Le support 18 est propre à être fixé au faux-châssis 4 du véhicule 1, par exemple par boulonnage.

Le corps 19 du vérin d'aide au décollage 17 comprend une paroi latérale 21, un nez 22 et un fonds 23.

La paroi latérale 21 présente une forme cylindrique de révolution ayant un axe de révolution X. La paroi latérale 21 délimite une cavité interne 24.

Le nez 22 et le fonds 23 ferment la cavité interne 24 à chacune des extrémités du corps 19.

Le nez 22 est fixé à la paroi latérale 21, par exemple par vissage.

Le fonds 23 est fixé à la paroi latérale 21, par exemple par soudure.

Le fonds 23 a une surface externe 25. La surface externe 25 du fonds 23 comprend une portion convexe 27 qui est propre à venir en contact avec une surface d'appui 32 fixe par rapport au faux-châssis 4. La portion convexe 27 présente une forme bombée.

Plus précisément, la surface externe 25 comprend une portion conique 26 et une portion sphérique 27. La portion sphérique 27 s'étend dans le prolongement de la portion conique 26 et forme le sommet de la portion conique 26. La portion sphérique 27 est propre à venir en appui sur la surface d'appui 32 lorsque le vérin d'aide au décollage 17 sollicite le bras de levage 4. La portion conique 26 présente la forme d'un cône de révolution ayant pour axe de révolution l'axe de révolution X de la paroi latérale 21.

Dans l'exemple illustré sur les figures 5 à 10, la surface d'appui 32 est une surface du faux-châssis 4, par exemple une surface d'une traverse faisant partie du faux-châssis 4.

Le piston 20 est monté mobile en translation par rapport au corps 19 parallèlement à un axe de translation. L'axe de translation est parallèle à un axe de révolution X de la paroi latérale 21.

La tige 9 présente une forme générale cylindrique de révolution ayant pour axe de révolution l'axe de révolution X de la paroi latérale 21. La tige 9 est reçue partiellement à l'intérieur de la cavité interne 24 du corps 19. La tige 9 présente une première extrémité 28 (ou extrémité inférieure) située à l'intérieur du corps 19 et reliée au piston 20, et une deuxième extrémité 29 (ou extrémité supérieure) située à l'extérieur du corps 19.

La deuxième extrémité 29 de la tige 9 a une surface externe 30 présentant une portion convexe 35 propre à venir en contact avec le bras de levage 5. La portion convexe 35 présente une forme bombée.

Plus précisément, dans l'exemple illustré sur les figures 5 à 10, la surface externe 30 présente une portion 35 de forme ellipsoïdale. La portion 35 de forme ellipsoïdale est propre à venir en contact avec une surface d'appui 45 d'une portions latérales 31 du bras de levage 5.

Le piston 20 est propre à coulisser à l'intérieur de la cavité interne 24 parallèlement à l'axe de translation (qui est parallèle à l'axe de révolution X).

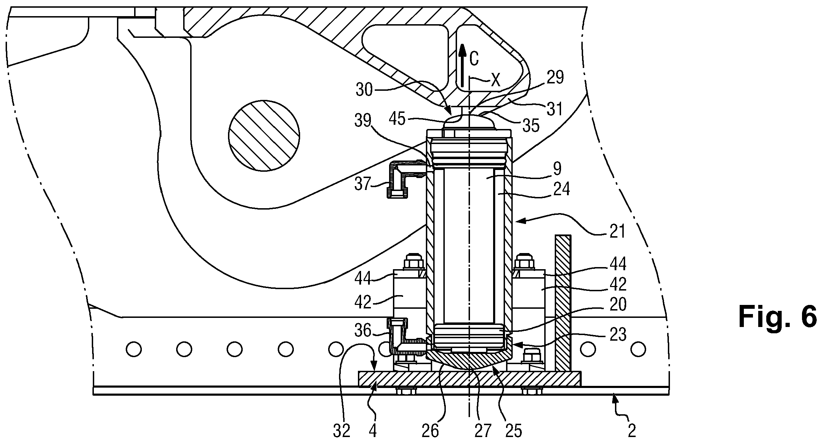

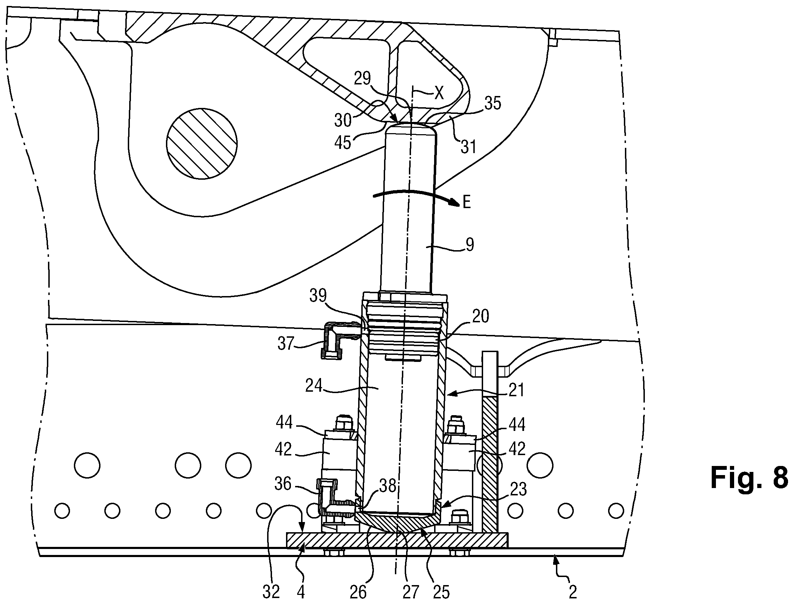

Plus précisément, le piston 20 est propre à coulisser à l'intérieur de la cavité interne 24 entre une première position extrême (ou position extrême rétractée) illustrée sur la figure 6, et une deuxième position extrême (ou position extrême déployée) illustrée sur la figure 8.

Comme cela est visible sur les figures 6 à 10, le piston 20 sépare la cavité interne 24 en une première chambre 33 et en une deuxième chambre 34.

Le vérin d'aide au décollage 17 comprend en outre un premier conduit 36 et un deuxième conduit 37.

Le premier conduit 36 est raccordé au corps 19. Plus précisément, le premier conduit 36 est en communication avec la première chambre 33 via un premier orifice 38 ménagé dans le fonds 25. Le premier conduit 36 est propre à être raccordé à un système d'injection de fluide (non-représenté) pour injecter du fluide dans la première chambre, de manière à provoquer une translation du piston 20 dans un premier sens de translation (ou sens de déploiement), illustré par la flèche C, parallèlement à l'axe de translation. Le premier sens de déplacement est le sens de déplacement du piston 20 lorsque le piston 20 passe de la première position extrême (ou position extrême rétractée) à la deuxième position extrême (ou position extrême déployée).

De même, le deuxième conduit 37 est raccordé au corps 19. Plus précisément, le deuxième conduit 37 est en communication avec la deuxième chambre 34 via un deuxième orifice 39 ménagé dans la paroi latérale 21. Le deuxième conduit 37 est propre à être raccordé à un système d'injection de fluide (non-représenté) pour injecter du fluide depuis la deuxième chambre, de manière à provoquer un déplacement du piston 20 dans un deuxième sens de déplacement (ou sens de rétraction), illustré par la flèche D, opposé au premier sens de déplacement, parallèlement à l'axe de translation. Le deuxième sens de déplacement est le sens de déplacement du piston 20 lorsque le piston 20 passe de la deuxième position extrême (ou position extrême déployée) à la première position extrême (ou position extrême rétractée).

Le fluide injecté est par exemple de l'huile.

Le vérin d'aide au décollage 17 comprend en outre un dispositif de liaison 40 entre le corps 19 et le support 18. Le dispositif de liaison 40 comprend un plateau 41 et des pièces déformables 42.

Le plateau 41 est fixé à la paroi latérale 21. Plus précisément, le plateau 41 s'étend autour de la paroi latérale 21, transversalement à l'axe de translation du piston 20.

Le plateau 41 est relié au support 18 par l'intermédiaire des pièces déformables 42.

Dans l'exemple illustré sur les figures 5 à 10, le dispositif de liaison 40 comprend quatre pièces déformables 42 (seules trois pièces déformables 42 sont visibles sur la figure 5).

Dans l'exemple illustré sur les figures 5 à 10, le plateau 41 présente une partie centrale 43 et des extensions radiales 44. Plus précisément, dans cet exemple, le plateau 41 comprend quatre extensions radiales 44 (seules trois extensions radiales 44 sont visibles sur la figure 5).

Chaque pièce déformable 42 peut être une pièce élastique. Dans l'exemple illustré sur les figures 5 à 10, chaque pièce élastique 42 est un bloc en matériau élastique. Le matériau élastique peut être du caoutchouc, une matière plastique, telle qu'un élastomère, ou tout autre matériau qui au cours du fonctionnement normal du vérin d'aide au décollage 17 est capable de se déformer de manière élastique. Toutefois, il serait possible de remplacer le bloc en matériau élastique par une autre pièce élastique, telle qu'un ressort par exemple.

Chaque bloc en matériau élastique présente une forme cylindrique de révolution.

Chaque pièce élastique 42 est fixée à l'une de ses extrémités à un bras radial respectif 44 du plateau 41, et à l'autre de ses extrémités au support 18, par exemple au moyen de vis.

Ainsi, les pièces élastiques 42 sont disposées en étant réparties autour du corps 19.

En l'absence de sollicitations externes du vérin d'aide au décollage 17, les pièces élastiques 42 maintiennent le corps 19 dans une première orientation angulaire prédéfinie par rapport au support 18 (orientation illustrée sur la figure 6).

Au cours du fonctionnement du vérin d'aide au décollage 17, les pièces élastiques 42 peuvent être déformées sous l'effet d'une sollicitation externe du vérin d'aide au décollage 17, de manière à autoriser un basculement (c'est-à-dire un déplacement angulaire) du corps 19 par rapport au support 18 vers une deuxième orientation angulaire. Du fait de leur élasticité, lorsqu'elles sont déformées, les pièces élastiques 42 génèrent une force de rappel élastique tendant à s'opposer à un tel basculement.

Le vérin d'aide au décollage 17 fonctionne de la manière suivante.

Initialement, le dispositif de levage 3 est en configuration retractée (configuration illustrée sur la figure 1). Dans cette configuration, le bras de levage 5 est replié sur le faux-châssis 4.

Le corps 19 du vérin d'aide au décollage 17 est orienté selon la première orientation angulaire (orientation illustrée sur la figure 6) et le piston 20 du vérin d'aide au décollage 17 est en position extrême retractée (position illustrée sur la figure 6). Dans cette position, la deuxième extrémité 29 de la tige 9 n'est pas en contact avec le bras de levage 5. Ainsi, le bras de levage 4 ne sollicite par la tige 9 du vérin d'aide au décollage 17. Comme les pièces élastiques 42 ne sont pas déformées, le dispositif de liaison 40 n'exerce pas de force élastique de rappel sur le corps 19 du vérin d'aide au décollage 17.

Lorsque le dispositif de levage 3 est commandé pour passer de la configuration rétractée à la configuration déployée (configuration illustrée sur la figure 2), les premiers vérins 7 sont commandés pour faire pivoter le bras de levage 5 par rapport au faux-châssis 4 autour de la première liaison pivot 12 dans le premier sens de rotation (sens de la flèche A sur la figure 2).

Simultanément, le vérin d'aide au décollage 17 est commandé pour assister les premiers vérins 7 au cours du début du mouvement de pivotement. Autrement dit, le vérin d'aide au décollage 17 est commandé pour appliquer une force de soulèvement F sur le bras de levage 5 afin d'aider le décollage du bras de levage 5.

A cet effet, le vérin d'aide au décollage 17 est commandé pour déplacer la tige 9 par rapport au corps 19 dans le premier sens de translation (ou sens de déploiement) illustré par la flèche C. A cet effet, du fluide sous pression est injecté dans la première chambre 33, ce qui a pour effet de provoquer un déplacement du piston 20 par rapport au corps 19 dans le premier sens de translation, depuis la position extrême rétractée vers la position extrême déployée.

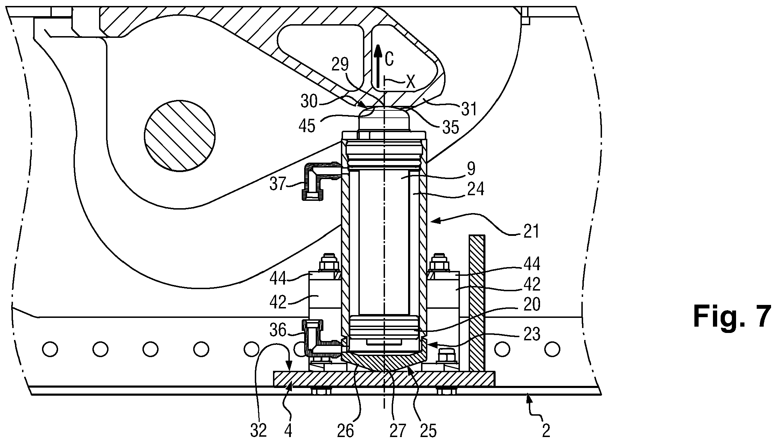

Au cours du déplacement de la tige 9, la deuxième extrémité 29 de la tige 9 entre en contact avec le bras de levage 5 (comme cela est illustré sur la figure 7). Plus précisément, la deuxième extrémité 29 de la tige 9 entre en contact avec l'une des portions latérales 31 du bras de levage 5. La tige 9 exerce une force de poussée sur le bras de levage 5 qui tend à assister le pivotement du bras de levage 5 dans le premier sens de rotation (sens de la flèche A illustrée sur la figure 2).

A partir du moment où la tige 9 exerce une force de poussée sur le bras de levage 5, le bras de levage 5 exerce une force de réaction dans une direction opposée à la force de poussée, qui tend à repousser le vérin d'aide au décollage 17 vers le faux châssis 4. Cela a pour effet de mettre en appui le corps 19 du vérin d'aide au décollage 17, et plus précisément la portion convexe 27 du corps 19 du vérin d'aide au décollage 17 sur la surface d'appui 32.

A mesure que le bras de levage 5 pivote par rapport au faux-châssis 4, le bras de levage 5 sollicite radialement la deuxième extrémité 29 de la tige 9, ce qui provoque un basculement du corps 19 du vérin d'aide au décollage 17 par rapport au support 18 dans un premier sens de basculement (sens de la flèche E illustrée sur la figure 8).

Grâce à la forme bombée de la portion 35 de la surface externe 30, la deuxième extrémité 29 de la tige 9 roule sur le bras de levage 5 à mesure que le bras de levage 5 pivote par rapport au faux-châssis 4.

Ainsi, à mesure du déploiement du bras de levage 5, l'orientation angulaire de l'axe de translation du vérin d'aide au décollage 17 change par rapport au support 18. Le corps 19 du vérin passe progressivement de la première orientation angulaire (orientation illustrée sur la figure 7) à une deuxième orientation angulaire (orientation illustrée sur la figure 8).

Au cours du basculement du corps 19 du vérin d'aide au décollage 17 par rapport au support 18, les pièces élastiques 42 subissent une déformation. Certaines des pièces élastiques 42 sont comprimées tandis que d'autres des pièces élastiques 42 sont étirées. Ainsi, le dispositif de liaison 40 autorise le basculement du corps 19 par rapport au support 18 de la première orientation angulaire vers la deuxième orientation angulaire, tout en exerçant une force élastique de rappel tendant à ramener le corps 19 vers la première orientation angulaire.

Le basculement progressif du corps 19 par rapport au support 18 est rendu possible par le fait que la portion sphérique 27 roule sur le faux-châssis 4 à mesure que le corps 19 du vérin d'aide au décollage 17 est déplacé angulairement par rapport au support 18.

Le piston 20 se déplace par rapport au corps 19 jusqu'à la position extrême déployée (position illustrée sur la figure 8). Dans cette position, le corps 19 du vérin d'aide au décollage 17 est orienté selon la deuxième orientation angulaire.

Une fois que le piston 20 a atteint la position extrême déployée, le déplacement du piston 20 cesse, alors que le bras de levage 5 continue de pivoter par rapport au faux-châssis 4 dans le premier sens de rotation (sens de la flèche A) grâce à l'action des premiers vérins 7.

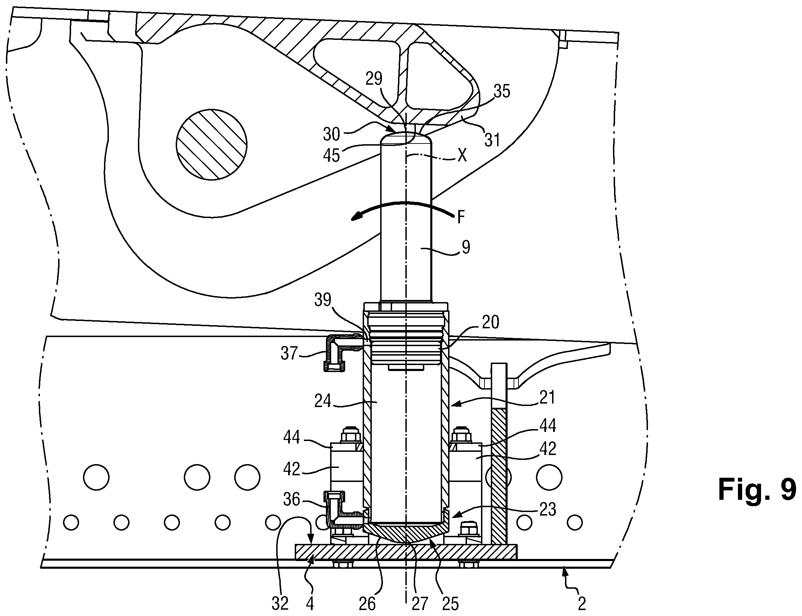

A partir de ce moment, la deuxième extrémité 29 de la tige 9 perd le contact avec le bras de levage 5. Cela a pour conséquence que le bras de levage 5 cesse de solliciter la deuxième extrémité 29 de la tige 9. La force élastique de rappel exercée par les pièces élastiques 42 provoque un basculement du corps 19 par rapport au support 18 dans un deuxième sens de basculement (sens illustré par la flèche F sur la figure 9) opposé au premier sens de basculement.

Sous l'effet de la force élastique de rappel exercée par les pièces élastiques 42, le corps 19 du vérin d'aide au décollage se déplace par rapport au support 18 jusqu'à revenir dans la première orientation angulaire (orientation illustrée sur la figure 9).

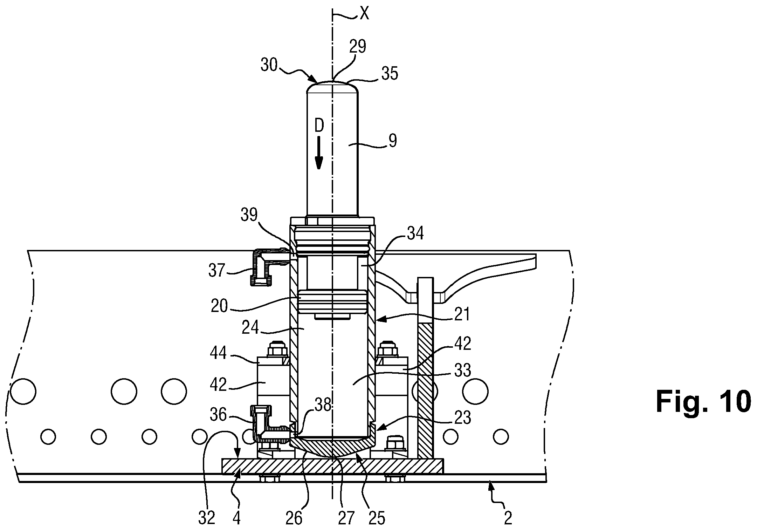

Puis, le vérin d'aide au décollage 17 est commandé pour déplacer la tige 9 par rapport au corps 19 dans un deuxième sens de translation (ou sens de rétraction), illustré par la flèche D sur la figure 10, opposé au premier sens de translation, parallèlement à l'axe de translation. A cet effet, du fluide est injecté dans la deuxième chambre 34, ce qui a pour effet de provoquer un déplacement du piston 20 par rapport au corps 21 dans le deuxième sens de translation, depuis la position extrême déployée vers la position extrême rétractée.

Une fois que le piston 20 a atteint la position extrême rétractée, le vérin d'aide au décollage se trouve à nouveau dans sa position initiale telle qu'illustrée sur la figure 6.

## Revendications

1. Vérin d'aide au décollage (17) comprenant :
- un support (18) propre à être fixé sur un faux-châssis (4) d'un dispositif de levage (3),
- un corps (19),
- un piston (20) monté mobile en translation par rapport au corps (19) selon un axe de translation,
- une tige (9) reliée au piston (20) et présentant une extrémité (29) propre à venir en contact avec un bras de levage (5) du dispositif de levage (3), pour pousser le bras de levage (5) lors d'une rotation du bras de levage (5) par rapport au faux-châssis (4), et
- un dispositif de liaison (40) reliant le corps (19) au support (18), le dispositif de liaison (40) autorisant un déplacement angulaire du corps (19) par rapport au support (18) lors de la rotation du bras de levage (5) par rapport au faux-châssis (4),
dans lequel le corps (19) a une surface externe (25) présentant une portion convexe (27) agencée pour venir en appui contre une surface d'appui (32) montée fixe par rapport au faux-châssis (4) lorsque la tige (9) pousse le bras de levage (5), la portion convexe (27) étant propre à rouler sur la surface d'appui (32) lors du déplacement angulaire du corps (19) par rapport au support (18).

2. Vérin d'aide au décollage (17) selon la revendication 1, dans lequel le dispositif de liaison (40) comprend une pièce élastique (42) propre à être déformée lorsque le corps (19) est déplacé angulairement depuis une première orientation vers une deuxième orientation, de manière à générer une force de rappel élastique tendant à ramener le corps (19) vers la première orientation.

3. Vérin d'aide au décollage selon la revendication 2, dans lequel la pièce élastique (42) comprend un bloc en matériau élastique.

4. Vérin d'aide au décollage selon l'une des revendications 2 et 3, dans lequel le dispositif de liaison (40) comprend plusieurs pièces élastiques (42) réparties autour du corps (19).

5. Vérin d'aide au décollage selon l'une des revendications 1 à 4, dans lequel la portion convexe (27) présente une forme ellipsoïdale, de préférence une forme sphérique.

6. Vérin d'aide au décollage selon l'une des revendications 1 à 5, dans lequel le corps (19) comprend une paroi latérale (21) délimitant une cavité interne (24) dans laquelle est reçu le piston (20), et un fond (23) fixé à la paroi latérale (21), la surface externe (25) étant une surface externe du fond (23).

7. Vérin d'aide au décollage selon la revendication 6, dans lequel le fond (23) présente une portion conique (26) s'étendant depuis la paroi latérale (21) jusqu'à la portion convexe (27).

8. Vérin d'aide au décollage selon l'une des revendications 6 et 7, dans lequel le fond (23) est fixé à la paroi latérale (21) par soudure.

9. Vérin d'aide au décollage selon l'une des revendications 1 à 8, dans lequel l'extrémité (29) de la tige (9) a une surface externe (30) présentant une portion convexe (35) propre à venir en contact avec le bras de levage (4) pour pousser le bras de levage (4).

10. Vérin d'aide au décollage selon la revendication 9, dans lequel la portion convexe (35) est propre à rouler sur une surface d'appui (45) du bras de levage (4) lors du déplacement angulaire du corps (19) par rapport au support (18).

11. Vérin d'aide au décollage selon l'une des revendications 9 et 10, dans lequel la portion convexe (35) présente une forme ellipsoïdale.

12. Dispositif de levage (3) comprenant un faux-châssis (4) destiné à être fixé sur le châssis (2) d'un véhicule (1), un bras de levage (5) monté sur le faux-châssis (4) par l'intermédiaire d'une liaison pivot (12) autorisant une rotation du bras de levage (5) par rapport au faux-châssis (4) entre une configuration retractée et une configuration déployée, et un vérin d'aide au décollage (17) conforme à l'une des revendications 1 à 11 pour pousser le bras de levage (5) lors d'une rotation du bras de levage (5) par rapport au faux-châssis (4) vers la configuration déployée.

13. Dispositif de levage (3) selon la revendication 12, dans lequel le bras de levage (5) comprend une bielle (8) ayant deux portions latérales (31), le dispositif de levage (3) comprenant deux vérins d'aide au décollage (17), chaque vérin d'aide au décollage (17) ayant une tige (9) présentant une extrémité (29) propre à venir en contact avec une portion latérale (31) respective de la bielle (8), pour pousser le bras de levage (5).

14. Dispositif de levage (3) selon l'une des revendications 12 et 13, dans lequel la rotation du bras de levage (5) depuis la configuration rétractée vers la configuration déployée entraine un déplacement angulaire du corps (19) depuis la première orientation vers une deuxième orientation, et dans lequel le dispositif de liaison (40) du vérin d'aide au décollage (17) comprend une pièce élastique (42) propre à être déformée lorsque le corps (19) est déplacé angulairement depuis la première orientation vers la deuxième orientation, de manière à générer une force de rappel élastique tendant à ramener le corps (19) vers la première orientation.

15. Véhicule de levage ou de manutention (1), comprenant un châssis (2) et un dispositif de levage (3), le dispositif de levage comprenant :
- un faux-châssis (4) fixé sur le châssis (2),
- un bras de levage (5) monté sur le faux-châssis (4) par l'intermédiaire d'une liaison pivot (12) autorisant une rotation du le bras de levage (5) par rapport au faux-châssis (4), et
- un vérin d'aide au décollage (17) comprenant un support (18) fixé sur le faux-châssis (4), un corps (19), un piston (20) monté mobile en translation par rapport au corps (19) selon un axe de translation, une tige (9) reliée au piston (20) et présentant une extrémité (29) destinée à venir en contact avec le bras de levage (5) pour pousser le bras de levage (5) lors de la rotation du bras de levage (5) par rapport au faux-châssis (4), et un dispositif de liaison (40) reliant le corps (19) au support (18), le dispositif de liaison autorisant un déplacement angulaire du corps (19) par rapport au support (18) lors de la rotation du bras de levage (5) par rapport au faux-châssis (4),
dans lequel le corps (19) présente une première surface (25) et le véhicule comprend une deuxième surface (32) montée fixe par rapport au faux-châssis (4), l'une de la première surface (25) et de la deuxième surface (32) comprend une portion convexe (27) agencée pour venir en appui sur l'autre de la première surface (25) et de la deuxième surface (32) lorsque la tige (9) pousse le bras de levage (5), la portion convexe (27) étant propre à rouler sur l'autre de la première surface (25) et de la deuxième surface (32) lors du déplacement angulaire du corps (19) par rapport au support (18).

16. Véhicule selon la revendication 15, dans lequel le dispositif de levage (3) est conforme à l'une des revendications 12 à 14.

## Patentansprüche

1. Aufbockhilfszylinder (17), umfassend:
- einen Träger (18), der an einem Hilfsrahmen (4) einer Hebevorrichtung (3) befestigbar ist,
- einen Körper (19),
- einen Kolben (20), der in Bezug auf den Körper (19) gemäß einer Translationsachse translatorisch beweglich angebracht ist,
- eine Stange (9), die mit dem Kolben (20) verbunden ist und ein Ende (29) aufweist, das imstande ist, mit einem Hubarm (5) der Hebevorrichtung (3) in Kontakt zu kommen, um den Hubarm (5) bei einer Drehung des Hubarms (5) in Bezug auf den Hilfsrahmen (4) zu schieben, und
- eine Verbindungsvorrichtung (40), die den Körper (19) mit dem Träger (18) verbindet, wobei die Verbindungsvorrichtung (40) eine Winkelbewegung des Körpers (19) in Bezug auf den Träger (18) bei der Drehung des Hubarms (5) in Bezug auf den Hilfsrahmen (4) gestattet,
wobei der Körper (19) eine äußere Oberfläche (25) aufweist, die einen konvexen Abschnitt (27) aufweist, der eingerichtet ist, um auf einer Auflagefläche (32) aufzuliegen, die in Bezug auf den Hilfsrahmen (4) fest angebracht ist, wenn die Stange (9) den Hubarm (5) schiebt, wobei der konvexe Abschnitt (27) imstande ist, bei der Winkelbewegung des Körpers (19) in Bezug auf den Träger (18) auf der Auflagefläche (32) zu rollen.

2. Aufbockhilfszylinder (17) nach Anspruch 1, wobei die Verbindungsvorrichtung (40) ein elastisches Teil (42) umfasst, das verformbar ist, wenn der Körper (19) von einer ersten Ausrichtung in eine zweite Ausrichtung derart winklig bewegt wird, dass eine elastische Rückstellkraft erzeugt wird, die darauf abzielt, den Körper (19) in die erste Ausrichtung zurückzuführen.

3. Aufbockhilfszylinder nach Anspruch 2, wobei das elastische Teil (42) einen Block aus elastischem Material umfasst.

4. Aufbockhilfszylinder nach einem der Ansprüche 2 und 3, wobei die Verbindungsvorrichtung (40) mehrere elastische Teile (42) umfasst, die um den Körper (19) herum verteilt sind.

5. Aufbockhilfszylinder nach einem der Ansprüche 1 bis 4, wobei der konvexe Abschnitt (27) eine ellipsoide Form, vorzugsweise eine Kugelform, aufweist.

6. Aufbockhilfszylinder nach einem der Ansprüche 1 bis 5, wobei der Körper (19) eine Seitenwand (21), die einen inneren Hohlraum (24) begrenzt, in dem der Kolben (20) aufgenommen ist, und einen an der Seitenwand (21) befestigten Boden (23) umfasst, wobei die äußere Oberfläche (25) eine äußere Oberfläche des Bodens (23) ist.

7. Aufbockhilfszylinder nach Anspruch 6, wobei der Boden (23) einen konischen Abschnitt (26) aufweist, der sich von der Seitenwand (21) bis zum konvexen Abschnitt (27) erstreckt.

8. Aufbockhilfszylinder nach einem der Ansprüche 6 und 7, wobei der Boden (23) durch Schweißen an der Seitenwand (21) befestigt ist.

9. Aufbockhilfszylinder nach einem der Ansprüche 1 bis 8, wobei das Ende (29) der Stange (9) eine äußere Oberfläche (30) hat, die einen konvexen Abschnitt (35) aufweist, der imstande ist, mit dem Hubarm (4) in Kontakt zu kommen, um den Hubarm (4) zu schieben.

10. Aufbockhilfszylinder nach Anspruch 9, wobei der konvexe Abschnitt (35) imstande ist, bei der Winkelbewegung des Körpers (19) in Bezug auf den Träger (18) auf einer Auflagefläche (45) des Hubarms (4) zu rollen.

11. Aufbockhilfszylinder nach einem der Ansprüche 9 und 10, wobei der konvexe Abschnitt (35) eine ellipsoide Form aufweist.

12. Hebevorrichtung (3), umfassend einen Hilfsrahmen (4), der zur Befestigung am Fahrgestell (2) eines Fahrzeugs (1) bestimmt ist, einen Hubarm (5), der auf dem Hilfsrahmen (4) über eine Schwenkverbindung (12) angebracht ist, die eine Drehung des Hubarms (5) in Bezug auf den Hilfsrahmen (4) zwischen einer eingefahrenen Konfiguration und einer ausgefahrenen Konfiguration gestattet, und einen Aufbockhilfszylinder (17) nach einem der Ansprüche 1 bis 11, um den Hubarm (5) bei einer Drehung des Hubarms (5) in Bezug auf den Hilfsrahmen (4) in die ausgefahrene Konfiguration zu schieben.

13. Hebevorrichtung (3) nach Anspruch 12, wobei der Hubarm (5) eine Pleuelstange (8) mit zwei seitlichen Abschnitten (31) umfasst, wobei die Hebevorrichtung (3) zwei Aufbockhilfszylinder (17) umfasst, wobei jeder Aufbockhilfszylinder (17) eine Stange (9) hat, die ein Ende (29) aufweist, das imstande ist, mit einem jeweiligen Seitenabschnitt (31) der Pleuelstange (8) in Kontakt zu kommen, um den Hubarm (5) zu schieben.

14. Hebevorrichtung (3) nach einem der Ansprüche 12 und 13, wobei die Drehung des Hubarms (5) aus der eingefahrenen in die ausgefahrene Konfiguration eine Winkelbewegung des Körpers (19) von der ersten Ausrichtung in eine zweite Ausrichtung bewirkt, und wobei die Verbindungsvorrichtung (40) des Aufbockhilfszylinders (17) ein elastisches Teil (42) umfasst, das imstande ist, verformt zu werden, wenn der Körper (19) von der ersten Ausrichtung in die zweite Ausrichtung derart verlagert wird, dass eine elastische Rückstellkraft erzeugt wird, die darauf abzielt, den Körper (19) in die erste Ausrichtung zurückzuführen.

15. Hebe- oder Förderfahrzeug (1), das ein Fahrgestell (2) und eine Hebevorrichtung (3) umfasst, wobei die Hebevorrichtung umfasst:
- ein Hilfsfahrgestell (4), das am Fahrgestell (2) befestigt ist,
- einen Hubarm (5), der über eine Schwenkverbindung (12), die eine Drehung des Hubarms (5) in Bezug auf den Hilfsrahmen (4) ermöglicht, auf dem Hilfsrahmen (4) angebracht ist und
- einen Aufbockhilfszylinder (17), der einen am Hilfsrahmen (4) befestigten Träger (18), einen Körper (19), einen Kolben (20), der in Bezug auf den Körper (19) entlang einer Translationsachse translatorisch beweglich angebracht ist, eine Stange (9), die mit dem Kolben (20) verbunden ist und ein Ende (29) aufweist, das bestimmt ist, mit dem Hubarm (5) in Kontakt zu kommen, um den Hubarm (5) bei der Drehung des Hubarms (5) in Bezug auf den Hilfsrahmen (4) zu schieben, und eine Verbindungsvorrichtung (40) umfasst, die den Körper (19) mit dem Träger (18) verbindet, wobei die Verbindungsvorrichtung eine Winkelbewegung des Körpers (19) in Bezug auf den Träger (18) bei der Drehung des Hubarms (5) in Bezug auf den Hilfsrahmen (4) gestattet,
wobei der Körper (19) eine erste Oberfläche (25) aufweist und das Fahrzeug eine zweite Oberfläche (32) umfasst, die in Bezug auf den Hilfsrahmen (4) fest angebracht ist, wobei eine von der ersten Oberfläche (25) und der zweiten Oberfläche (32) einen konvexen Abschnitt (27) umfasst, der eingerichtet ist, um auf der anderen von der ersten Oberfläche (25) und der zweiten Oberfläche (32) aufzuliegen, wenn die Stange (9) den Hubarm (5) schiebt, wobei der konvexe Abschnitt (27) imstande ist, bei der Winkelbewegung des Körpers (19) in Bezug auf den Träger (18) auf der anderen von der ersten Oberfläche (25) und der zweiten Oberfläche (32) zu rollen.

16. Fahrzeug nach Anspruch 15, wobei die Hebevorrichtung (3) nach einem der Ansprüche 12 bis 14 ist.

## Claims

1. Take-off assist actuator (17) comprising :
- a support (18) suitable for being fixed to a subframe (4) of a lifting device (3),
- a body (19),
- a piston (20) moveably mounted in translation relative to the body (19) along a translation axis,
- a rod (9) connected to the piston (20) and having an end (29) suitable for coming into contact with a lifting arm (5) of the lifting device (3), in order to push the lifting arm (5) during rotation of the lifting arm (5) relative to the subframe (4), and
- a connecting device (40) connecting the body (19) to the support (18), the connecting device (40) allowing angular displacement of the body (19) relative to the support (18) during rotation of the lifting arm (5) relative to the subframe (4),
wherein the body (19) has an external surface (25) having a convex portion (27) arranged to bear against a bearing surface (32) fixedly mounted relative to the subframe (4) when the rod (9) pushes the lifting arm (5), the convex portion (27) being suitable for rolling on the bearing surface (32) during the angular displacement of the body (19) relative to the support (18).

2. Take-off assist actuator (17) according to claim 1, wherein the connecting device (40) comprises a resilient part (42) capable of being deformed when the body (19) is displaced angularly from a first orientation to a second orientation, so as to generate a resilient return force tending to return the body (19) to the first orientation.

3. Take-off assist actuator according to claim 2, wherein the resilient part (42) comprises a block of resilient material.

4. Take-off assist actuator according to one of claims 2 and 3, wherein the connecting device (40) comprises several elastic parts (42) distributed around the body (19).

5. Take-off assist actuator according to one of claims 1 to 4, wherein the convex portion (27) has an ellipsoidal shape, preferably a spherical shape.

6. Take-off assist actuator according to one of claims 1 to 5, wherein the body (19) comprises a side wall (21) delimiting an internal cavity (24) in which the piston (20) is received, and a bottom (23) fixed to the side wall (21), the external surface (25) being an external surface of the bottom (23).

7. Take-off assist actuator according to claim 6, wherein the bottom (23) has a conical portion (26) extending from the side wall (21) to the convex portion (27).

8. Take-off assist actuator according to one of claims 6 and 7, wherein the bottom (23) is fixed to the side wall (21) by welding.

9. Take-off assist actuator according to one of claims 1 to 8, wherein the end (29) of the rod (9) has an external surface (30) having a convex portion (35) suitable for coming into contact with the lifting arm (4) in order to push the lifting arm (4).

10. Take-off assist actuator according to claim 9, wherein the convex portion (35) is suitable for rolling on a bearing surface (45) of the lifting arm (4) during angular displacement of the body (19) relative to the support (18).

11. Take-off assist actuator according to one of claims 9 and 10, wherein the convex portion (35) has an ellipsoidal shape.

12. Lifting device (3) comprising a subframe (4) intended to be fixed to the chassis (2) of a vehicle (1), a lifting arm (5) mounted on the subframe (4) via a pivot connection (12) allowing rotation of the lifting arm (5) relative to the subframe (4) between a retracted configuration and a deployed configuration, and a take-off assist actuator (17) according to one of claims 1 to 11 for pushing the lifting arm (5) during rotation of the lifting arm (5) relative to the subframe (4) towards the deployed configuration.

13. Lifting device (3) according to claim 12, wherein the lifting arm (5) comprises a connecting link (8) having two lateral portions (31), the lifting device (3) comprising two take-off assist actuators (17), each take-off assist actuator (17) having a rod (9) with an end (29) suitable for coming into contact with a respective lateral portion (31) of the connecting link (8), in order to push the lifting arm (5).

14. Lifting device (3) according to one of claims 12 and 13, wherein rotation of the lifting arm (5) from the retracted configuration to the deployed configuration causes angular displacement of the body (19) from the first orientation to a second orientation, and in which the connecting device (40) of the take-off assist actuator (17) comprises a resilient part (42) capable of being deformed when the body (19) is displaced angularly from the first orientation towards the second orientation, so as to generate a resilient return force tending to return the body (19) towards the first orientation.

15. Lifting or handling vehicle (1), comprising a chassis (2) and a lifting device (3), the lifting device comprising :
- a subframe (4) fixed to the chassis (2),
- a lifting arm (5) mounted on the subframe (4) by means of a pivot link (12) allowing rotation of the lifting arm (5) relative to the subframe (4), and
- a take-off assist actuator (17) comprising a support (18) fixed to the subframe (4), a body (19), a piston (20) movably mounted in translation with respect to the body (19) along a translation axis, a rod (9) connected to the piston (20) and having an end (29) intended to come into contact with the lifting arm (5) in order to push the lifting arm (5) during rotation of the lifting arm (5) with respect to the subframe (4), and a connecting device (40) connecting the body (19) to the support (18), the connecting device allowing angular displacement of the body (19) relative to the support (18) during rotation of the lifting arm (5) relative to the subframe (4),
wherein the body (19) has a first surface (25) and the vehicle comprises a second surface (32) fixedly mounted relative to the subframe (4), one of the first surface (25) and the second surface (32) comprises a convex portion (27) arranged to bear on the other of the first surface (25) and the second surface (32) when the rod (9) pushes the lifting arm (5), the convex portion (27) being suitable for rolling on the other of the first surface (25) and the second surface (32) during angular displacement of the body (19) relative to the support (18).

16. A vehicle as claimed in claim 15, wherein the lifting device (3) is a lifting device according to one of claims 12 to 14.
